# FASCICULE DE BREVET EUROPEEN

(11) **EP 1 451 498 B1**
(45) Date de publication et mention de la délivrance du brevet: **22.03.2006**
(21) Numéro de dépôt: 02799091.0
(22) Date de dépôt: 04.12.2002
(51) Int. Cl.: F16L 23/08

(54) **SYSTEME DE SERRAGE POUR LE RACCORDEMENT ETANCHE DE DEUX TUBES AYANT DES SURFACES D APPUI.**
SPANNVORRICHTUNG ZUR DICHTEN KUPPLUNG VON ZWEI ROHREN MIT SPANNAUFLAGEN
CLAMPING SYSTEM FOR THE SEALED CONNECTION OF TWO TUBES HAVING SUPPORT SURFACES

(30) Priorité: 05.12.2001 FR 0115737
(43) Date de publication de la demande: 01.09.2004
(73) Titulaire: Etablissements CAILLAU, 92130 Issy-les-Moulineaux (FR)
(72) Inventeur: RIGOLLET, Nicolas, F-41200 Romorantin (FR); PREVOT, Fabrice, 41130 Selles sur Cher (FR); ROINTRU, Tony, F-41210 Marcilly en Vault (FR)
(74) Mandataire: Intes, Didier Gérard André
(86) Numéro de dépôt international: PCT/FR2002/004180
(87) Numéro de publication internationale: WO 2003/048624

(56) Documents cités:
- EP-A- 0 849 518
- FR-A- 2 588 357
- US-A- 2 663 582
- US-A- 2 761 707
- US-A- 3 822 075

## Description

La présente invention concerne un système de serrage pour le raccordement étanche de deux tubes dont les extrémités en regard présentent des surfaces d'appui faisant saillie par rapport à la surface extérieure cylindrique desdits tubes, le système comprenant un collier et une rondelle apte à coopérer avec au moins l'un des tubes, le collier comportant une bande apte à coopérer avec lesdites surfaces d'appui par sa périphérie intérieure délimitant un renfoncement et des moyens pour serrer ladite bande.

Un système de serrage de ce type est connu par le brevet US 3 964 773. La section de la bande du collier est par exemple sensiblement en forme de V ou de U, de façon que les ailes formées par cette section prennent respectivement appui sur la surface d'appui de chacune des extrémités des tubes. Ainsi, le serrage du collier tend à maintenir les tubes l'un contre l'autre. La section en forme de V est intéressante dans la mesure où, lors du serrage du collier, elle rapproche les tubes l'un de l'autre.

Les moyens de serrage de la bande comprennent par exemple un système de vis. Ainsi, les extrémités de la bande peuvent être redressées de manière à former des pattes d'appui munies de perçages dans lesquels peut être insérée une vis. Un écrou est disposé derrière l'une de ces pattes de telle sorte que la rotation de la vis entraîne le serrage du collier.

US 3 964 773 préconise d'utiliser une rondelle d'étanchéité entre les extrémités des deux tubes. Il s'agit d'une rondelle conique, qui est engagée dans l'extrémité évasée de l'un des tubes et contre laquelle prend appui l'extrémité de l'autre tube qui présente une forme sensiblement complémentaire à celle de ladite extrémité évasée.

La rondelle du système de serrage de US 3 964 773 qui, dans l'exemple présenté par ce document, sert à assurer l'étanchéité, constitue une pièce entièrement distincte du collier de serrage, qui doit être manipulée séparément de ce dernier. Il en résulte que la pose de l'ensemble du système de serrage est relativement compliquée, l'opérateur devant manipuler plusieurs pièces qu'il doit, chacune, positionner correctement par rapport aux tubes.

Ainsi, dans US 3 964 773, il faut d'abord disposer la rondelle correctement par rapport à l'extrémité du premier tube, disposer l'extrémité du second tube correctement par rapport à la rondelle, maintenir l'ensemble constitué par les deux tubes et la rondelle, puis mettre en place le collier sur cet ensemble et le serrer.

EP 0849 518 A1 décrit et représente sur ses figures 15 à 18 un système de serrage selon le préambule de la revendication 1.

L'invention vise à améliorer cet état de la technique en proposant un système de serrage comprenant un collier et une rondelle, qui soit simple à manipuler et à mettre en place sur les tubes.

Ce but est atteint grâce à un système de serrage selon la revendication 1 et en paticulier au fait que la rondelle est solidarisée avec le collier par des moyens de fixation.

La manipulation du système de serrage comprenant le entier de serrage et la rondelle, ainsi que la mise en place de ce système de serrage sur les tubes sont grandement facilitées. Ceci simplifie le travail de l'opérateur chargé de serrer les deux tubes à l'aide du système de serrage et permet d'éviter, ou tout au moins de limiter, les risques de mauvais montage.

les moyens de fixation comprennent des organes de fixation aptes à être déformés lors du serrage de la bande.

De tels moyens de fixation permettent effectivement de solidariser la rondelle au collier, sans gêner le serrage de la bande.

les moyens de fixation comprennent des pattes, solidaires de la rondelle et ayant une extrémité libre apte à coopérer avec la bande du collier.

Ces pattes sont des organes de fixation simples à réaliser, dont les extrémités peuvent par exemple s'accrocher sur la bande du collier. Comme indiqué précédemment, ces pattes sont avantageusement déformables, la déformation pouvant par exemple consister à modifier la forme de leur extrémité libre sous l'effet du serrage pour que cette extrémité libre échappe au collier.

Avantageusement, le système de serrage de l'invention comprend des moyens de pré-montage pour, à l'état non serré de la bande du collier, solidariser ledit collier avec l'un des tubes.

Cette variante avantageuse facilite encore le montage du système de serrage sur les tubes. Plus précisément, pour raccorder les tubes à l'aide du système de serrage, il suffit de mettre en place ce dernier sur l'un des tubes en utilisant les moyens de pré-montage, puis de rapprocher l'autre tube et de serrer la bande du collier.

Avantageusement, les moyens de pré-montage sont solidaires de la rondelle.

Le collier constitue une pièce de serrage qui doit être capable d'exercer des contraintes importantes sur les tubes. Il est en particulier réalisé en métal, par exemple de l'inox ferritique ou austénitique, avantageusement stabilisé au titane pour résister à des températures élevées. La rondelle constitue en général une pièce plus ou moins déformable, d'épaisseur nettement moins importante que celle du collier. Cette rondelle n'a pas en effet pour fonction d'exercer, après serrage, une contrainte importante sur les extrémités des tubes. Elle est par exemple réalisée en métal tel que de l'inox ferritique ou austénitique. La bande du collier et la rondelle ont par exemple des épaisseurs respectives de 1,5 mm et de 0,4 mm.

La rondelle constitue une pièce moins coûteuse que le collier en lui-même en ce qui concerne en particulier la quantité de matière première nécessaire à sa fabrication. II est donc plus économique de faire en sorte que les moyens de pré-montage soient solidaires de la rondelle, et soient même éventuellement réalisés en une seule pièce avec elle, plutôt que de réaliser ces moyens de pré-montage en les rendant directement solidaires du collier.

Par ailleurs, grâce à des moyens de pré-montage solidaires de la rondelle, deux possibilités de montage sont offertes.

La première consiste à solidariser la rondelle avec le collier pour manipuler ainsi le système de serrage comme un tout, à relier ce système de serrage à l'extrémité de l'un des tubes en utilisant des moyens de pré-montage, puis à rapprocher l'autre tube et à réaliser le serrage.

La deuxième consiste à mettre en place la rondelle à l'extrémité de l'un des tubes grâce aux moyens de pré-montage, puis à relier le collier à la rondelle en solidarisant cette dernière avec ledit collier, puis enfin à rapprocher l'autre tube et à réaliser le serrage.

Avec l'une ou l'autre de ces possibilités, on met à profit à la fois le fait que la rondelle est solidarisée avec le collier et celui qu'elle comporte des moyens de pré-montage.

Ainsi, les moyens de pré-montage peuvent avantageusement comprendre des pattes de pré-montage aptes à s'agripper sur un premier des deux tubes.

Ces pattes de pré-montage, qui sont avantageusement réalisées en une seule pièce avec la rondelle, constituent des éléments simples à réaliser. Comme on le verra dans la suite, elles coopèrent avantageusement avec la périphérie externe du premier tube.

Selon une disposition alternative ou complémentaire, les moyens de pré-montage comprennent des surfaces de cramponnement, formées sur une portion axiale de la rondelle et aptes à se cramponner sur la périphérie interne d'un premier des deux tubes.

Ces surfaces de cramponnement permettent d'engager à force la portion axiale de la rondelle à l'intérieur de l'un des tubes et de retenir ainsi la rondelle par rapport à ce tube vis-à-vis d'un arrachement de la rondelle vers l'extérieur.

Il est avantageux que la rondelle présente au moins une portion de forme sensiblement tronconique.

Cette forme tronconique est avantageusement adaptée à la conformation des extrémités des tubes.

Avantageusement, la rondelle présente une fonction d'étanchéité. Cette fonction peut par exemple être assurée, comme dans US 3 964 773, par une rondelle de section constante et de géométrie adaptée à celles des extrémités des tubes, en particulier la géométrie tronconique précitée. Toutefois, avantageusement une surface de la rondelle présente au moins un renflement annulaire, qui forme un anneau d'étanchéité.

Ce renflement annulaire peut se comporter comme un joint d'étanchéité en étant capable de s'écraser plus ou moins sur lui-même axialement lors du serrage des tubes, ceci afin de compenser les éventuels défauts de géométrie des extrémités des tubes dus aux tolérances de fabrication habituelle.

La rondelle peut ainsi être réalisée en une seule pièce en comprenant à la fois des moyens de solidarisation avec le collier, éventuellement des moyens de pré-montage par rapport à l'un des tubes, et une partie formant joint d'étanchéité.

Selon sa conformation, la rondelle peut également simplement servir à permettre un pré-positionnement du collier par rapport aux tubes avant le montage. En effet, lorsque la rondelle présente des moyens de pré-montage, elle peut être fixée dans une position déterminée par rapport à l'un des tubes, de sorte que, dans la mesure où la rondelle est solidaire du collier, l'ensemble du système de serrage est correctement positionné par rapport aux tubes.

L'invention sera bien comprise et ses avantages apparaîtront mieux à la lecture de la description détaillée qui suit, d'un mode de réalisation représenté à titre d'exemple. La description se réfère aux dessins annexés sur lesquels :
- la figure 1 est une vue en élévation d'un système de serrage conforme à l'invention ;
- la figure 2 est une vue de côté de la figure 1, sur laquelle sont également ébauchées les extrémités des tubes devant être raccordés à l'aide de ce système de serrage ;
- la figure 3 est une vue en élévation de la rondelle appartenant au système de serrage de l'invention ;
- la figure 4 est une vue de côté de la figure 3 ;
- la figure 5 est une vue en perspective de cette rondelle, considérée selon la direction V de la figure 4 ;
- les figures 6 et 7 sont deux coupes axiales partielles du système de serrage monté à l'extrémité de l'un des tubes, respectivement prises selon les rayons VI et VII de la figure 3 ;
- la figure 8 est une vue en coupe axiale du système de serrage serré sur les extrémités de deux tubes raccordés entre eux ; et
- la figure 9 est une vue en perspective de la rondelle d'un système de serrage selon une variante de l'invention.

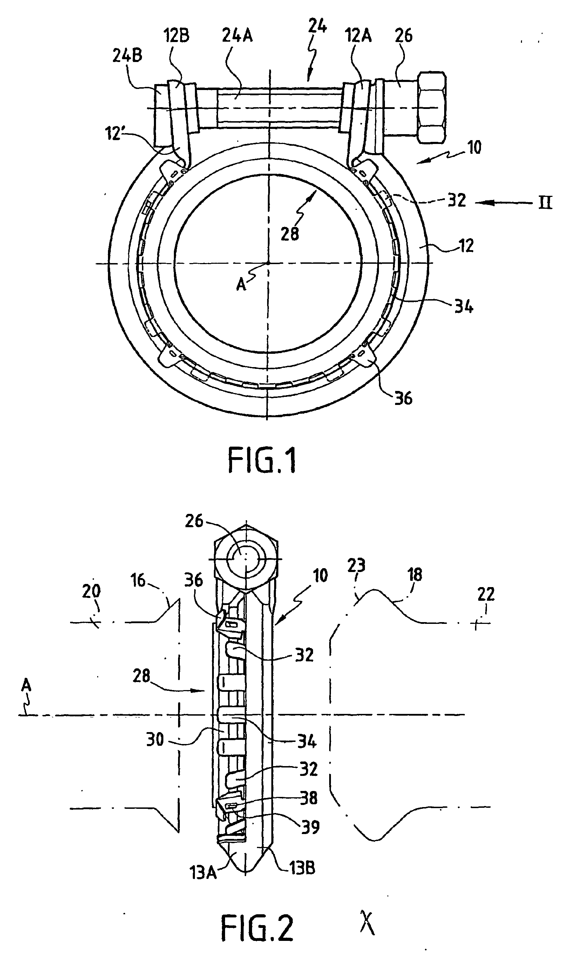

Le système de serrage comprend un collier 10 globalement du même type que celui que décrit la demande de brevet EP 0 305 232. Ce collier comporte une bande 12 qui, comme on le voit mieux sur les figures 2 et 6 à 8, a une périphérie intérieure qui délimite un renfoncement 14 dans lequel des surfaces d'appui, respectivement 16 et 18 appartenant aux extrémités de deux tubes, respectivement 20 et 22, peuvent être insérées. Ce renfoncement et ces surfaces d'appui ont des formes telles que le serrage de la bande du collier contraint les extrémités des tubes à se rapprocher l'une de l'autre. Ainsi, la bande 12 présente en section avantageusement une forme en V, tandis que les surfaces d'appui ont un diamètre qui augmente graduellement vers les extrémités libres des tubes, et sont par exemple de forme tronconique.

La bande 12 présente des extrémités, respectivement 12A et 12B, qui sont redressées sensiblement radialement de manière à former des pattes d'appui. Ces dernières sont percées de manière à permettre le passage de la tige 24A d'une vis 24 à travers lesdites pattes. La tête 24B de la vis peut être calée par rapport à l'une des pattes d'appui, en l'espèce la patte 12B, tandis que l'extrémité libre de la tige de vis coopère avec un écrou 26. La rotation de l'écrou dans le sens du vissage rapproche les pattes d'appui 12A et 12B l'une de l'autre, et réduit donc le diamètre intérieur du collier, c'est-à-dire qu'elle permet de serrer la bande. Les pattes d'appui sont avantageusement renforcées par des déformations appropriées, tels que des retours 12'.

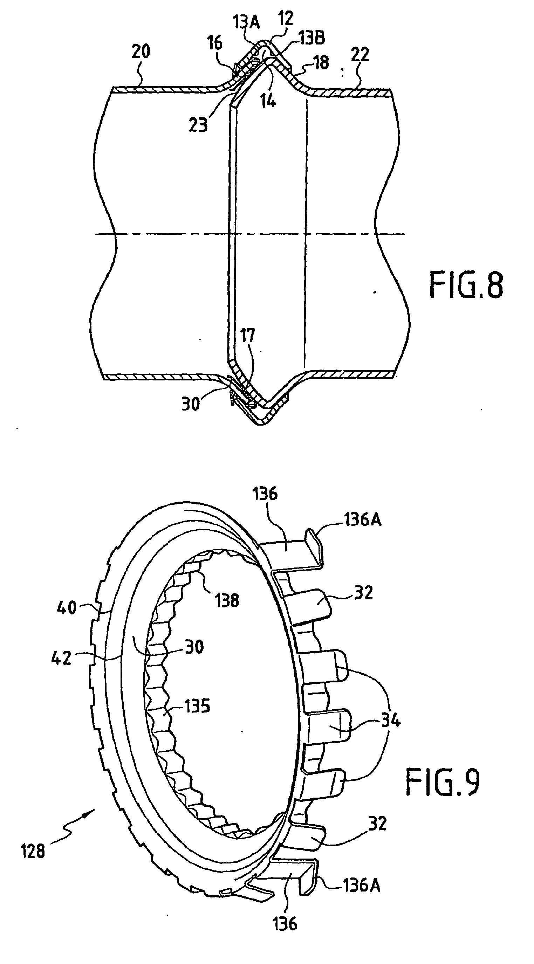

Le système de serrage comprend également une rondelle 28 qui est solidarisée avec le collier 10. Cette rondelle 28 présente une portion 30 qui a une forme tronconique et qui, comme on le voit sur la figure 8, peut s'insérer entre les extrémités en regard des deux tubes 20 et 22 quand ils sont serrés à l'aide du système de serrage.

A cet égard, il convient de relever que l'extrémité du tube 20 est une extrémité femelle, sa périphérie interne présentant un évasé. En revanche, l'extrémité du tube 22 est une extrémité mâle qui, au-delà de la surface d'appui 18, présente une périphérie extérieure 23 dont le diamètre va en diminuant vers l'extrémité libre. Cette partie d'extrémité libre 23 peut donc s'insérer, sensiblement avec complémentarité de forme, à l'intérieur de l'évasé 17 formé à l'extrémité libre du tube 20. Comme on le voit sur la figure 8, la portion tronconique 30 de la rondelle 28 est alors disposée entre l'évasé 17 et l'extrémité 23.

Lorsque le système de serrage est monté sur les tubes, la branche 13A de la section en V du collier coopère avec la surface d'appui 16 du tube 20. La rondelle 28 est disposée à l'intérieur de cette branche 13A.

Pour la clarté de la représentation, la partie du collier correspondant à cette branche 13A a été presque totalement arrachée sur la vue de la figure 2. A l'état non serré du collier, alors que la rondelle est solidarisée avec ledit collier, elle s'étend à l'intérieur de ce collier sensiblement jusqu'à la jonction entre les branches 13A et 13B de la section de ce collier, c'est-à-dire jusqu'au sommet du V formé par ces branches.

Les moyens de fixation de la rondelle par rapport au collier comprennent des pattes de fixation, qui sont solidaires de la rondelle et dont l'extrémité libre est apte à coopérer avec la bande du collier. Ces pattes sont même formées en une seule pièce avec la rondelle.

Dans l'exemple avantageux représenté, les pattes de fixation comprennent des pattes de différents types. Elles comprennent ainsi des pattes internes 32 qui, à l'état non serré de la bande du collier, coopèrent avec la périphérie intérieure de cette bande, ainsi que des pattes externes qui, à l'état non serré de la bande du collier, coopèrent avec un bord de la bande ou avec la périphérie extérieure de cette dernière.

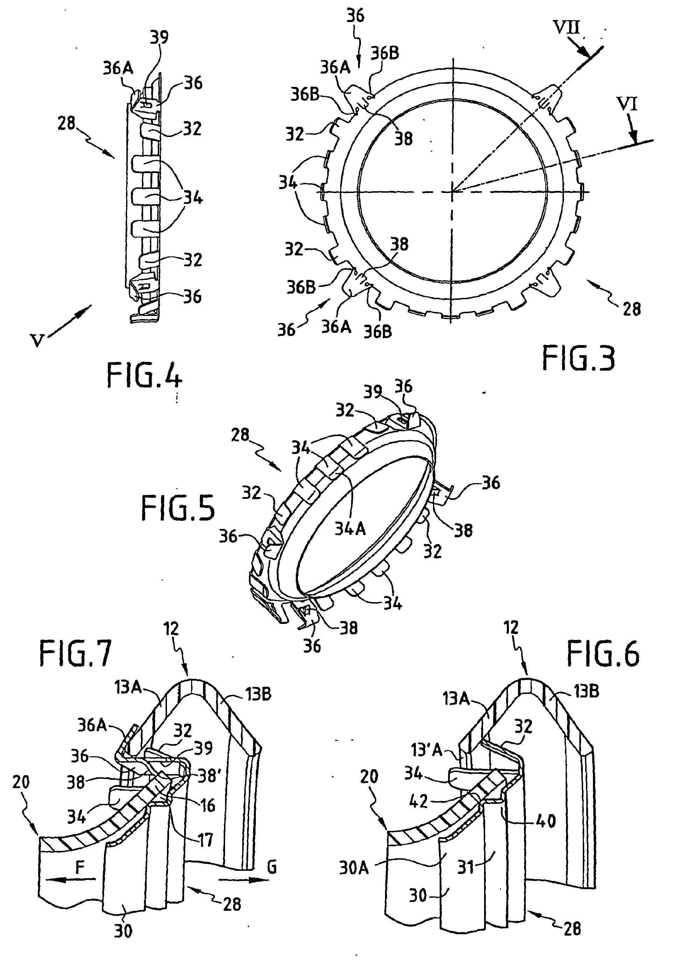

Les pattes internes 32 sont plus courtes que les pattes externes et, comme on le voit en particulier sur les figures 5 et 6, elles sont légèrement relevées radialement de manière que leurs extrémités libres prennent appui sur la périphérie intérieure de la branche 13A de la section du collier. De manière générale, les pattes internes sont davantage écartées de l'axe A du collier que les pattes externes (elles forment par exemple un angle de l'ordre de 10° par rapport à l'axe A du collier).

Dans l'exemple avantageux représenté, les pattes externes sont de deux types différents. En effet, comme on le voit sur la figure 6, certaines pattes externes 34 se différencient des pattes internes 32 en ce qu'elles sont plus longues que ces dernières et en ce qu'elle sont orientées sensiblement parallèlement à l'axe A, de telle sorte qu'elles coopèrent avec un bord 13'A de la bande du collier. Ce bord est évidemment dans l'exemple représenté celui de la branche 13A. Simplement, la face externe des pattes 34 repose contre ce bord. Leurs extrémités libres 34A peuvent toutefois être légèrement relevées. Dans la mesure où les pattes externes 34 sont réparties sur la circonférence de la rondelle, il en résulte un centrage de ladite rondelle par rapport à la bande du collier. Les pattes 32 empêchent, quant à elles, un arrachement de la rondelle par rapport au collier dans le sens F allant en s'éloignant de la branche 13B de cette bande.

Les pattes externes comprennent également des pattes 36 qui coopèrent avec la périphérie extérieure du collier. En l'espèce, c'est avec la périphérie extérieure de la branche 13A que coopèrent ces pattes 36. Les pattes 36 présentent des extrémités libres 36A conformées en crochet, qui s'accrochent sur le bord 13'A de la bande du collier en coopérant avec la périphérie externe de la portion 13A. La partie médiane des pattes 36 s'étend sensiblement parallèlement à l'axe A, comme les pattes 34, mais leurs extrémités 36A sont repliées. Ainsi, les pattes 36 s'opposent à un déplacement axial de la rondelle par rapport au collier dans le sens G allant en se rapprochant de la branche 13B de la bande de ce collier.

Comme on le constate en comparant la figure 7, qui montre la situation avant le serrage du collier et la figure 8 qui montre la situation après le serrage, les extrémités 36A des pattes 36 recourbées en crochet ont tendance à se "dérouler" ou à se "déplier" lors du serrage, pour permettre à la rondelle 28 de se rapprocher de la face intérieure de la branche 13A de la section du collier. Dans le même temps, les pattes 32 et 34, de même que la partie médiane des pattes 36 ont tendance à se déformer de telle sorte que leurs extrémités extérieures se rapprochent de l'axe A, c'est-à-dire qu'elles sont finalement disposées sensiblement parallèlement à la surface d'appui 16.

Ainsi, la déformation des pattes est parfaitement maîtrisée et permet un contact de serrage satisfaisant entre la rondelle, le collier et les tubes.

Comme on le voit sur les figures 1 et 3, seule une portion de la rondelle 28 qui, à l'état non serré de la bande du collier, se trouve disposée entre les pattes d'appui 12A et 12B précitées, est exempte des pattes d'accrochage. Les pattes d'accrochage sont réparties sur le reste de la périphérie de la rondelle. Elles sont réparties régulièrement angulairement de manière à éviter les possibilités de débattement de la rondelle par rapport au collier. Par exemple, la rondelle comporte au moins 3 ou 4 pattes 32, au moins 3 ou 4 pattes 34 et au moins 3 ou 4 pattes 36 qui sont réparties sur sa périphérie. En l'espèce, on a choisi de disposer 4 pattes 36, 6 pattes 32 qui sont chacune adjacente à une patte 36 et plusieurs pattes 34 disposées entre les pattes 32. Par exemple 9 pattes 34 sont prévues au total.

On décrit maintenant les moyens de pré-montage qui permettent, à l'état non serré de la bande du collier, de solidariser ce collier avec l'un des tubes. En l'espèce, c'est avec le tube 20 (ou plus précisément avec son extrémité libre) que peut être solidarisé le collier.

Dans la variante des figures 1 à 8, les moyens de pré-montage comprennent des pattes de pré-montage qui sont aptes à s'agripper sur le tube 20. En l'espèce, on a choisi de faire en sorte que ces pattes de pré-montage soient les mêmes que les pattes 36 précédemment décrites. Il pourrait toutefois s'agir d'autres pattes ne s'accrochant pas au collier comme le font les pattes 36.

En particulier, les moyens qui permettent le pré-montage, qui vont être décrits dans la suite, peuvent parfaitement équiper les pattes 34.

En effet, pour remplir sa fonction de pré-montage, une patte de pré-montage présente une languette 38, qui est découpée dans cette patte et qui présente une extrémité libre apte à coopérer avec la périphérie externe du tube sur lequel elle s'agrippe. Pour cela, une fenêtre 39 est découpée dans la patte de pré-montage sur seulement trois côtés, tandis que la languette 38 est formée par la portion découpée qui reste solidaire du quatrième côté de la fenêtre et qui est légèrement pliée par rapport à la patte qui la porte.

La languette 38 est disposée de telle sorte que son extrémité libre soit tournée vers l'axe A dans le sens allant vers la branche 13B du collier. Elle se présente ainsi sensiblement perpendiculairement à la surface d'appui 16 du tube 20, sur laquelle elle s'accroche. Le tube est disposé de telle sorte que sa périphérie interne évasée 17 vienne coiffer la périphérie extérieure de la portion 30 de la rondelle 28. La périphérie évasée 17 vient en contact de cette périphérie extérieure et ne peut donc plus avancer dans le sens G de la figure 7 par rapport à la rondelle.

Lors de l'insertion de l'extrémité du tube 20 dans le collier, la languette 38 s'est légèrement déformée élastiquement en se rapprochant de la direction axiale, puis s'est accrochée sur la surface 16, ce qui empêche le déplacement du tube par rapport au collier dans le sens F.

Ainsi, la rondelle, le collier de serrage et le tube 20 sont calés les uns par rapport aux autres dans les sens axiaux F et G. Dans la mesure où l'on a judicieusement disposé les pattes 36 dont les extrémités 36A forment des crochets au voisinage des pattes d'appui 12A et 12B du collier, la rondelle est également calée angulairement par rapport à ce collier avant serrage.

En l'espèce, chacune des pattes 36 comprend une languette 38. Comme indiqué précédemment, ces languettes pourraient, de manière alternative ou complémentaire, être disposées sur les pattes 34.

Les extrémités libres des languettes 38 définissent, considérées ensembles, un cercle de rayon inférieur au rayon maximal de la surface d'appui 16, ce rayon maximal étant en l'espèce celui de l'extrémité libre de cette surface d'appui 16.

Quant à elles, les extrémités libres des pattes 32 précitées définissent un cercle de rayon supérieur au rayon minimal, avant serrage, de la bande du collier, ce rayon minimal étant en l'espèce défini par le rayon du bord 13'A. Lors de la mise en place de la rondelle 28 dans le collier, ces pattes 32 se déforment également élastiquement en se rapprochant de l'axe, puis se redressent pour coopérer avec la périphérie interne de la branche 13A de la section du collier. Les pattes 34 et les portions médianes des pattes 36 définissent, quant à elles, un cercle de rayon sensiblement égal à celui du cercle défini par le bord 13'A.

Avantageusement, les moyens de pré-montage permettent non seulement un calage axial du système de serrage par rapport au premier tube, mais également un calage angulaire. Pour ce faire, au moins une patte de pré-montage présente au moins un bord incliné apte à coopérer avec la périphérie externe du premier tube.

En l'espèce, comme on le voit mieux sur les figures 3 et 5, les bords axiaux 36B des pattes 36 sont repliés de manière à se rapprocher de l'axe A. Par exemple, les deux bords axiaux de chaque patte 36 sont ainsi repliés et définissent entre eux un secteur angulaire de l'ordre de 60°. Ces bords inclinés 36B s'agrippent également sur la surface d'appui 16 du tube 20. Du fait de leurs inclinaisons, ils s'opposent à une rotation relative de la rondelle 28 et du tube 20. Comme pour les languettes 38, on pourrait choisir de réaliser ces bords axiaux repliés sur les pattes 34 plutôt que sur les pattes 36.

Comme le montrent les figures, en particulier les figures 6 et 7, une surface de la rondelle présente un renflement annulaire qui forme un anneau d'étanchéité. En fait, la rondelle est une pièce d'épaisseur sensiblement constante, réalisée par déformations successives et par découpe à partir d'une pièce cylindrique ou annulaire. Une expansion ou un rétreint donne à la rondelle sa forme tronconique, tandis que les pattes sont découpées. Considérée en section axiale, la rondelle 28 (sa portion tronconique 30) présente un pliage qui délimite ledit renflement annulaire, désigné par la référence 40.

Ce renflement 40 peut jouer le rôle d'un joint d'étanchéité coopérant de manière étanche avec les tubes. En fait, il est avantageux que la rondelle présente un renflement 40 sur sa périphérie interne, destiné à coopérer avec l'extrémité 23 du tube 22, et également un renflement 42, situé sur sa périphérie externe pour coopérer avec l'évasé 17 du tube 20. Ces renflements sont conformés comme des pliages et, si l'on considère la périphérie interne de la portion 30 de la rondelle entre ses deux extrémités axiales, on constate successivement un renfoncement (qui, sur la périphérie externe de la rondelle, forme le renflement 42), puis le renflement 40. En réalité, les renflements 40 et 42 sont formés aux deux extrémités d'une portion 31 de la rondelle qui est parallèle à l'axe A, et qui est délimitée par deux épaulements. Comme on le voit sur la figure 8, lors du serrage, les renflements 40 et 42 peuvent légèrement s'écraser de manière à coopérer de manière étanche avec les tubes.

A son extrémité intérieure (celle dont le diamètre est le plus petit), la portion 30 de la rondelle présente un prolongement axial 30A. En section axiale, la rondelle forme donc un angle à la jonction du prolongement 30A et de la portion 30. Il en résulte une rigidification de la rondelle.

Les plis formés par la conformation des renflements 40 et 42 contribuent également à rigidifier la rondelle. Ces rigidifications permettent de limiter la tendance au voilage de la rondelle qui résulte des contraintes exercées sur elle lors du serrage, la répartition des contraintes que transmettent les pattes 32, 34 et 36 dépendant de la disposition de ces pattes et pouvant être inégale sur le pourtour de la rondelle.

On décrit maintenant la figure 9 qui montre une variante des moyens de pré-montage du système de serrage sur le premier tube. Comme la variante des figures précédentes, celle de la figure 9 prévoit de réaliser ces moyens de pré-montage sur la rondelle. La rondelle 128 de la figure 9 est globalement analogue à la rondelle 28 précédemment décrite, en ce qu'elle comporte comme elle une portion tronconique 30, les renflements 40 et 42 qui viennent d'être décrits, ainsi que les pattes de fixation, comprenant des pattes 32 aptes à coopérer avec la périphérie interne de la bande, des pattes 34 aptes à coopérer avec le bord 13'A de la bande du collier, et des pattes 136 aptes à s'accrocher sur cette bande. Ces pattes 136 diffèrent légèrement des pattes 36 précédemment décrites en ce qu'elles sont exemptes des languettes de pré-montage 38. Elles peuvent ou non présenter les bords repliés 36B des pattes 36. En tout état de cause, les extrémités libres 136A des pattes 136 sont repliées en crochet comme les extrémités libres 36A des pattes 36. Dans l'exemple de la figure 9, les moyens de pré-montage comprennent des surfaces de cramponnement qui sont formées sur une portion axiale 135 de la rondelle 128 et qui sont aptes à se cramponner sur la périphérie interne du premier tube. Pour réaliser le pré-montage, on insère donc à force la portion axiale 135 dans le premier tube. On pourra bien entendu prévoir que les surfaces de cramponnement de la figure 9 coexistent avec les moyens de pré-montage décrits en relation avec les figures 1 à 8.

Sur la figure 9, la portion axiale 135 de la rondelle 128 présente des déformations vers l'extérieur, désignées par la référence 138, qui augmentent localement ses dimensions radiales et qui forment donc la surface de cramponnement précitée.

En l'espèce, ces déformations vers l'extérieur sont simplement formées par des ondulations régulières s'étendant sur le bord libre de la portion axiale 135 ou sensiblement sur toute la longueur de cette portion.

## Revendications

1. Système de serrage pour le raccordement étanche de deux tubes (20, 22) dont les extrémités en regard présentent des surfaces d'appui (16, 18) faisant saillie par rapport à la surface extérieure cylindrique desdits tubes, le système comprenant un collier (10) et une rondelle (28 ; 128), le collier comportant une bande apte à coopérer avec lesdites surfaces d'appui par sa périphérie intérieure délimitant un renfoncement et des moyens (12A, 12B, 24, 26) pour serrer ladite bande (12), ladite rondelle (28 ;128) étant solidarisée avec le collier (10) par des moyens de fixation (32, 34, 36; 136), **caractérisé en ce que** ces moyens de fixation sont aptes à être déformés lors du serrage de la bande (12) et **en ce que** lesdits moyens de fixation comprennent des pattes (32, 34, 36 ; 136), solidaires de la rondelle (28 ; 128) et ayant une extrémité libre apte à coopérer avec la bande (12) du collier (10).

2. Système de serrage selon la revendication 1, **caractérisé en ce que** les pattes de fixation comprennent des pattes internes (32) qui, à l'état non serré de la bande (12) du collier (10), coopèrent avec la périphérie intérieure de ladite bande (12) et des pattes externes (34, 36, 136) qui, à l'état non serré de la bande (12) du collier (10), coopèrent avec un bord (13'A) de la bande (12) ou avec la périphérie extérieure de cette dernière.

3. Système de serrage selon l'une quelconque des revendications 1 et 2, **caractérisé en ce qu'**il comprend des moyens de pré-montage pour, à l'état non serré de la bande (12) du collier (10), solidariser ledit collier (10) avec l'un des tubes (20, 22).

4. Système de serrage selon la revendication 3, **caractérisé en ce que** les moyens de pré-montage sont solidaires de la rondelle (28, 128).

5. Système de serrage selon la revendication 4, **caractérisé en ce que** les moyens de pré-montage comprennent des pattes de pré-montage (36) aptes à s'agripper sur un premier des deux tubes (20, 22).

6. Système de serrage selon la revendication 5, **caractérisé en ce que** au moins une patte de pré-montage (36) présente une languette (38), découpée dans ladite patte et ayant une extrémité libre apte à coopérer avec la périphérie externe (16) du premier tube (20).

7. Système de serrage selon la revendication 5 ou 6, **caractérisé en ce que** au moins une patte de pré-montage (36) présente au moins un bord incliné (36B), apte à coopérer avec la périphérie externe (16) du premier tube (20).

8. Système de serrage selon l'une quelconque des revendications 5 à 7, **caractérisé en ce que** les pattes de pré-montage (36) présentent une extrémité libre (36A) repliée sur la périphérie externe de la bande (12) du collier (10) à l'état non serré de ce dernier.

9. Système de serrage selon l'une quelconque des revendications 1 à 8, **caractérisé en ce que** les moyens de pré-montage comprennent des surfaces de cramponnement (138), formées sur une portion axiale (135) de la rondelle (28, 128) et aptes à se cramponner sur la périphérie interne d'un premier des deux tubes (20, 22).

10. Système de serrage selon la revendication 9, **caractérisé en ce que** ladite portion axiale (135) de la rondelle (28, 128) présente des déformations vers l'extérieur, augmentant localement ses dimensions radiales et formant lesdites surfaces de cramponnement.

11. Système de serrage selon la revendication 10, **caractérisé en ce que** la portion axiale (135) de la rondelle (28, 128) présente des ondulations (138).

12. Système de serrage selon l'une quelconque des revendications 1 à 11, **caractérisé en ce que** la rondelle (28, 128) présente au moins une portion (30) de forme sensiblement tronconique.

13. Système de serrage selon l'une quelconque des revendications 1 à 12, **caractérisé en ce qu'**une surface de la rondelle (28, 128) présente au moins un renflement annulaire (40, 42), formant un anneau d'étanchéité.

## Patentansprüche

1. Spannvorrichtung zum dichten Verbinden zweier Rohre (20, 22), deren einander gegenüberliegende Enden Auflageflächen (16, 18) aufweisen, die bezüglich der zylindrischen Außenseite der Rohre überstehen, wobei die Vorrichtung eine Schelle (10) und eine Scheibe (28; 128) umfasst, wobei die Schelle ein Band aufweist, das durch seinen einen Rücksprung begrenzenden Innenumfang mit den Auflageflächen zusammenzuwirken vermag, sowie Mittel (12A, 12B, 24, 26) zum Spannen des Bandes (12), wobei die Scheibe (28; 128) mit der Schelle (10) durch Befestigungsmittel (32, 34, 36; 136) fest verbunden ist,
**dadurch gekennzeichnet, dass** die Befestigungsmittel beim Spannen des Bandes (12) verformt werden können, und dass die Befestigungsmittel Klammern (32, 34, 36; 136) aufweisen, die mit der Scheibe (28; 128) fest verbunden sind und ein freies Ende haben, das mit dem Band (12) der Schelle (10) zusammenzuwirken vermag.

2. Spannvorrichtung nach Anspruch 1,
**dadurch gekennzeichnet, dass** die Befestigungsklammern innere Klammern (32) aufweisen, die im nicht gespannten Zustand des Bandes (12) der Schelle (10) mit dem Innenumfang des Bandes (12) zusammenwirken, sowie äußere Klammern (34, 36; 136), die im nicht gespannten Zustand des Bandes (12) der Schelle (10) mit einem Rand (13'A) des Bandes (12) oder mit dessen Außenumfang zusammenwirken.

3. Spannvorrichtung nach einem der Ansprüche 1 oder 2,
**dadurch gekennzeichnet, dass** sie Mittel zur Vormontage umfasst, um die Schelle (10) im nicht gespannten Zustand des Bandes (12) der Schelle (10) mit einem der Rohre (20, 22) fest zu verbinden.

4. Spannvorrichtung nach Anspruch 3,
**dadurch gekennzeichnet, dass** die Vormontage-Mittel mit der Scheibe (28; 128) fest verbunden sind.

5. Spannvorrichtung nach Anspruch 4,
**dadurch gekennzeichnet, dass** die Vormontage-Mittel Vormontage-Klammern (36) umfassen, die sich an einem ersten der beiden Rohre (20, 22) anzuklammern vermögen.

6. Spannvorrichtung nach Anspruch 5,
**dadurch gekennzeichnet, dass** wenigstens eine Vormontage-Klammer (36) eine Zunge (38) aufweist, die in die Klammer geschnitten ist und ein freies Ende hat, das mit dem Außenumfang (16) des ersten Rohrs (20) zusammenzuwirken vermag.

7. Spannvorrichtung nach Anspruch 5 oder 6,
**dadurch gekennzeichnet, dass** wenigstens eine Vormontage-Klammer (36) wenigstens einen schrägen Rand (36B) aufweist, der mit dem Außenumfang (16) des ersten Rohrs (20) zusammenzuwirken vermag.

8. Spannvorrichtung nach einem der Ansprüche 5 bis 7,
**dadurch gekennzeichnet, dass** die Vormontage-Klammern (36) ein freies Ende (36A) aufweisen, das im nicht gespannten Zustand der Schelle über den Außenumfang des Bandes (12) der Schelle (10) gebogen ist.

9. Spannvorrichtung nach einem der Ansprüche 1 bis 8,
**dadurch gekennzeichnet, dass** die Vormontage-Mittel Klammerflächen (138) aufweisen, die auf einem axialen Teil (135) der Scheibe (28; 128) gebildet sind und sich am Innenumfang eines ersten der beiden Rohre (20, 22) festzuklammern vermögen.

10. Spannvorrichtung nach Anspruch 9,
**dadurch gekennzeichnet, dass** der axiale Teil (135) der Scheibe (28; 128) Verformungen nach außen aufweist, welche seine radialen Abmessungen lokal vergrößern und die Klammerflächen bilden.

11. Spannvorrichtung nach Anspruch 10,
**dadurch gekennzeichnet, dass** der axiale Teil (135) der Scheibe (28; 128) Wellungen (138) aufweist.

12. Spannvorrichtung nach einem der Ansprüche 1 bis 11,
**dadurch gekennzeichnet, dass** die Scheibe (28; 128) wenigstens ein im Wesentlichen kegelstumpfartiges Teil (30) aufweist.

13. Spannvorrichtung nach einem der Ansprüche 1 bis 12,
**dadurch gekennzeichnet, dass** eine Seite der Scheibe (28; 128) wenigstens eine ringförmige Verdickung (40, 42) aufweist, die einen Dichtungsring bildet.

## Claims

1. A clamping system for connecting two tubes (20, 22) together in leaktight manner, the facing ends of the tubes having bearing surfaces (16, 18) that project relative to the cylindrical outside surfaces of said tubes, the system comprising a collar (10) and a washer (28; 128), the collar having a band suitable for co-operating with said bearing surfaces via its inside periphery defining a setback, and means (12A, 12B, 24, 26) for tightening said band (12), said washer (28; 128) being secured to the collar (10) by fixing means (32, 34, 36; 136), said clamping system being **characterised in that** said fixing means are suitable for being deformed when the band (12) is tightened, and **in that** said fixing means comprise tabs (32, 34, 36; 136) secured to or integral with the washer (28; 128) and having free ends suitable for co-operating with the band (12) of the collar (10).

2. A clamping system according to claim 1, **characterised in that** the fixing tabs comprise internal tabs (32) which, when the band (12) of the collar (10) is in the non-tightened state, co-operate with the inside periphery of said band (12), and external tabs (34, 36, 136) which, when the band (12) of the collar (10) is in the non-tightened state, co-operate with an edge (13'A) of the band (12) or with the outside periphery of said band.

3. A clamping system according to claim 1 or claim 2, **characterised in that** it comprises pre-fitting means acting, when the band (12) of the collar (10) is in the non-tightened state, to secure said collar (10) to one of the tubes (20, 22).

4. A clamping system according to claim 3, **characterised in that** the pre-fitting means are secured to or integral with the washer (28, 128).

5. A clamping system according to claim 4, **characterised in that** the pre-fitting means comprise pre-fitting tabs (36) suitable for clinging onto a first one of the two tubes (20, 22).

6. A clamping system according to claim 5, **characterised in that** at least one pre-fitting tab (36) has a tongue (38) cut out in said tab and having a free end suitable for co-operating with the outside periphery (16) of the first tube (20).

7. A clamping system according to claim 5 or claim 6, **characterised in that** at least one pre-fitting tab (36) has at least one sloping edge (36B) suitable for co-operating with the outside periphery (16) of the first tube (20).

8. A clamping system according to any one of claims 5 to 7, **characterised in that** each of the pre-fitting tabs (36) have a free end (36A) folded back on the outside periphery of the band (12) of the collar (10) when the collar is in the non-tightened state.

9. A clamping system according to any one of claims 1 to 8, **characterised in that** the pre-fitting means comprise gripping surfaces (138) formed on an axial portion (135) of the washer (28, 128) and suitable for gripping onto the inside periphery of a first one of the two tubes (20, 22).

10. A clamping system according to claim 9, **characterised in that** said axial portion (135) of the washer (28, 128) has outwardly projecting deformations, locally increasing its radial dimensions and forming said gripping surfaces.

11. A clamping system according to claim 10, **characterised in that** the axial portion (135) of the washer (28, 128) has undulations (138).

12. A clamping system according to any one of claims 1 to 11, **characterised in that** the washer (28, 128) has at least one portion (30) of substantially frustoconical shape.

13. A clamping system according to any one of claims 1 to 12, **characterised in that** a surface of the washer (28, 128) has at least one annular bead (40, 42) forming a sealing ring.
